# EUROPEAN PATENT APPLICATION

(11) **EP 4 768 765 A1**
(43) Date of publication of application: **01.07.2026**
(21) Application number: 25227353.7
(22) Date of filing: 29.12.2025
(51) Int. Cl.: F16K 31/04, B05B 1/30, B05B 9/03, B05B 12/04

(54) **MOTOR ACTIVATED NOZZLE ASSEMBLY SYSTEM AND METHOD**

(30) Priority: 27.12.2024 US 202463739384 P
(71) Applicant: Pentair Flow Technologies, LLC, Delavan, WI 53115 (US)
(72) Inventor: FREESTON, Ben, Delavan, WI 53115 (US); HERMES, Jeff, Delavan, WI 53115 (US)
(74) Representative: Viering, Jentschura & Partner mbB Patent- und Rechtsanwälte

(57) **Abstract**

A nozzle assembly including a motor, a first one-way clutch, a first valve, a second one-way clutch, and a second valve is provided. The first one-way clutch is coupled to the second one-way clutch via a first shaft. The motor is configured to drive the first shaft. The first valve is coupled to the first one-way clutch. The second is valve coupled to the second one-way clutch.

## Description

### CROSS-REFERENCE TO RELATED APPLICATION

This application claims priority under 35 U.S.C. § 119 to U.S. Provisional Patent Application No. 63/739,384 filed on December 27, 2024, the entire contents of which are incorporated herein by reference.

### BACKGROUND

Motor-actuated valves are useful in fluid systems or applications, such as an irrigation system or a pool application, to meet a variety of demands. For example, in some instances, a motor-actuated valve can be used to selectively divert water to several features related to the particular application. With respect to an irrigation or agricultural system, the motor-actuated valve can facilitate fluid flow through nozzles or sprinkler heads. With respect to a pool or spa, the motor-actuated valve can selectively stop or divert water to water jets, waterfalls, fountains, pool filtration equipment, pool vacuums, spillways, and the like.

While conventional motor-actuated valves provide many benefits, they are also subject to various drawbacks. Some conventional motor-actuated valves are hand actuated impacting the efficiency and accuracy of the valves. Some conventional motor-actuated valves require one or more motors to actuate the valve between various positions (e.g., open, closed, flow diversions, etc.). The proliferation of motors adds complexity to a fluid system or application, may increase energy usage, and may increase maintenance costs to keep multiple motors in good working order. Accordingly, more sophisticated and versatile motor-actuated valve architectures would be useful.

### SUMMARY

Some embodiments provide a nozzle assembly including a motor, a first one-way clutch, a first valve, a second one-way clutch, and a second valve. The first one-way clutch is coupled to the second one-way clutch via a first shaft. The motor is configured to drive the first shaft. The first valve is coupled to the first one-way clutch. The second is valve coupled to the second one-way clutch.

In some embodiments, when the motor rotates in a first direction, the first one-way clutch transmits torque to the first valve, and the second one-way clutch does not transmit torque to the second valve.

In some embodiments, when the motor rotates in a second direction opposite the first direction, the first one-way clutch does not transmit torque to the first valve and the second one-way clutch transmits torque to the second valve.

In some embodiments, the first one-way clutch is coupled to the first valve via a second shaft and the second one-way clutch is coupled to the second valve via a third shaft .

In some embodiments, the first shaft extends through the motor.

In some embodiments, one or more of the first valve and the second valve is provided in the form of a ball valve.

In some embodiments, one or more of the first valve and the second valve are defined by a valve housing, a ball rotatable within the valve housing, and a shaft coupled to the ball.

In some embodiments, back and forth rotation of the motor is selectively transmitted by the first one-way clutch and the second one-way clutch to selectively open and close the first valve and the second valve, respectively.

Some embodiments provide a flow control system including a twin nozzle assembly and a controller. The twin nozzle assembly includes a motor, a first one-way clutch, a first valve, a second one-way clutch, and a second valve. The first one-way clutch is coupled to the motor and the first valve is coupled to the first one-way clutch. The second one-way clutch is coupled to the motor and the second valve is coupled to the second one-way clutch. The controller is in electrical communication with the motor.

In some embodiments, the controller selectively instructs the motor to turn in a first direction and in a second direction, the first direction being opposite the second direction.

In some embodiments, the controller monitors an angular position of the motor.

In some embodiments, the controller tracks the angular position in quarter-turn increments.

In some embodiments, the motor is indexed with one or more indexes and the controller detects the angular position by way of the indexes.

In some embodiments, the controller determines whether the first valve and the second valve are open based on the angular position.

In some embodiments, the first one-way clutch is coupled to the second one-way clutch via a shaft extending through the motor.

In some embodiments, the controller communicates with and receives operational instructions from a network.

In some embodiments, the motor is powered via the controller.

Some embodiments provide a method for controlling fluid flow within a flow control system. The method includes providing a twin nozzle assembly including a motor, a first valve, and a second valve, determining a flow orientation of at least one of the first valve or the second valve, rotating the motor in a first direction until the motor reaches an angular position that facilitates fluid flow through the first valve, and rotating the motor in a second direction until the motor reaches an angular position that facilitates fluid flow through the second valve.

In some embodiments, the method includes providing a controller designed to track the angular position in quarter-turn increments.

In some embodiments, the motor is indexed.

### BRIEF DESCRIPTION OF THE DRAWINGS

The accompanying drawings, which are incorporated in and form a part of this specification, illustrate embodiments of the disclosure and, together with the description, serve to explain the principles of embodiments of the disclosure:
FIG. 1 is a block diagram of a flow control system operating in a first flow orientation according to the principles of this disclosure;
FIG. 2 is a block diagram of the flow control system of FIG. 1 operating in a second flow orientation according to the principles of this disclosure;
FIG. 3 is a block diagram of the flow control system of FIG. 1 operating in a third flow orientation according to the principles of this disclosure;
FIG. 4 is a block diagram of the flow control system of FIG. 1 operating in a fourth flow orientation according to the principles of this disclosure; and
FIG. 5 is a flow diagram depicting a method for operating at least one device within the flow control system of FIG. 1 according to the principles of this disclosure.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the attached drawings. The invention is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As explained herein, it would be useful to provide an improved motor-actuated valve architecture for a fluid application or system. More particularly, a motor with a two-way rotatable shaft connected to multiple valves via clutches to facilitate fluid flow through the fluid application or system.

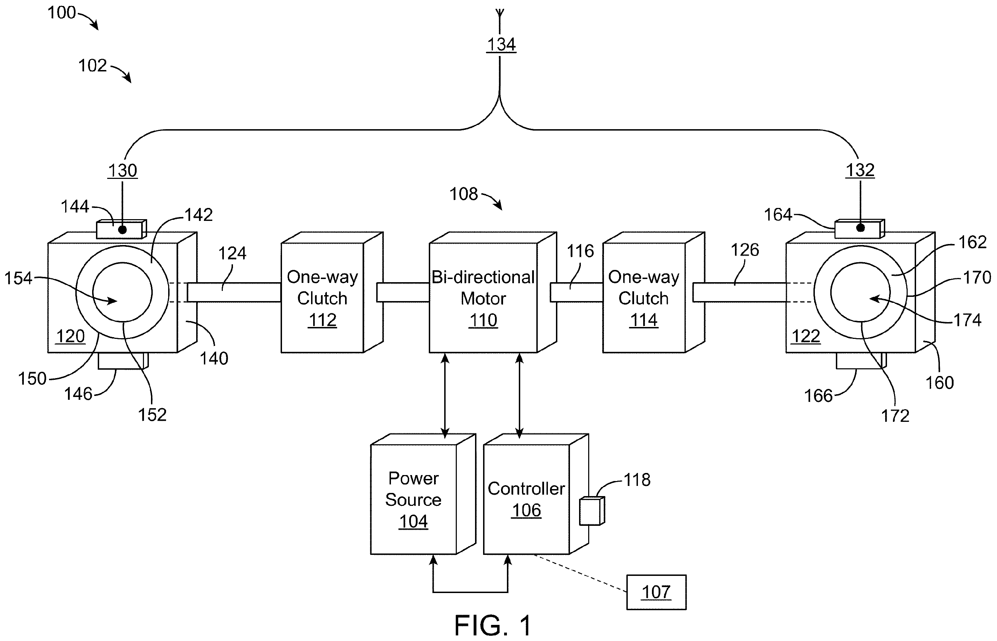

FIG. 1 illustrates a flow control system 100 according to one embodiment in a first flow orientation 102. The flow control system 100 can include a nozzle assembly 108, which is activated by a motor 110, to selectively control a fluid flowing through the system 100. In one instance, the nozzle assembly 108 is provided in the form of a twin nozzle body and is designed to control at least one of a first (e.g., fluid) flow 130 and/or a second (e.g., fluid) flow 132 through the system 100. The first flow 130 and the second flow 132 can originate from a common source 134.

In the nozzle assembly 108, the motor 110 is designed to drive the rotational direction of at least one component of the assembly 108 and/or the system 100, and the motor 110 can be bidirectional and/or provided in the form of a permanent magnet motor, a synchronous motor, an induction motor, or another suitable motor. In another instance, the motor 110 can be provided in the form of an enclosed fan-cooled motor. Moreover, in one instance, the nozzle assembly 108 may have more than one motor 110 to facilitate operation.

The system 100 further can include a power source 104 to provide electrical power to the system 100, the nozzle assembly 108, and/or the motor 110. A controller 106 of the system 100 can be designed to control and/or operate one or more components of the assembly 108 and/or the system 100 (e.g., the motor 110). Further, a network 107 can be provided in communication with the controller 106 for remote communication to and control from a remote server or other network-connected remote device.

In one instance, the controller 106 can be directly (e.g., onboard) or remotely coupled to the system 100. The system 100 may be communicatively coupled to the controller 106 to control, receive, and/or store data from the system 100. For example, the system 100 may be in wireless communication or wired communication via the network 107 to directly or indirectly communicate and/or control and/or operate and/or intelligently manage various components of the system 100, including, but not limited to, the nozzle assembly 108 and/or the motor 110. Moreover, the controller 106 can instruct, monitor, track, detect, and/or derive rotation and/or an angular position of the motor 110 and/or a shaft of the system 100 as discussed herein.

The controller 106 can be provided in the form of a data-processing device configured to transmit and receive data from the system 100. For example, the controller 106 may receive information at a receiver (not shown). A processor (not shown) included in the controller 106 may analyze the received data and determine instructions to be sent back to the system 100. A transmitter (not shown) of the controller 106 may send the instructions from the processor of the controller 106 to one or more components of the system 100. The controller 106 can further include a memory (not shown). The memory can be configured to store data received from the system 100. The memory can be implemented as a stand-alone memory unit and/or as part of the processor included in the controller 106. Further, in one non-limiting instance, the network 107 may be coupled to the memory of the controller 106, which may include program and/or operational instructions that are stored in the memory and executable by the processor to perform one or more of the methods described herein.

The network 107 can be provided in the form of a network interface, a local network, or another communication connection. One skilled in the art will recognize that a communication connection can facilitate the transmission and receipt of data using a plurality of communication protocols, including but not limited to wired, wireless, Bluetooth, cellular, satellite, GPS, RS-485, RF, MODBUS, CAN, CANBUS, DeviceNet, ControlNet, Ethernet TCP/IP, RS-232, Universal Serial Bus (USB), Firewire, Thread, proprietary protocol(s), or other communication protocol(s) as applicable. In some instances, the network 107 is located proximate to one or more components of the system 100. The network 107 can include the Internet, intranets, extranets, wide area networks ("WANs"), local area networks ("LANs"), wired networks, wireless networks, cloud networks, or other suitable networks, or any combination of two or more networks, Ethernet networks, and other types of networks. The network 107 may be configured to communicate directly or indirectly with the system 100 and/or a (e.g., user) device or interface 118, such as a mobile phone or a device having an application and/or a display. Inputs to control the motor 110 may be entered via the device 118.

As shown in FIG. 1, the nozzle assembly 108 can include a first one-way clutch 112 and a second one-way clutch 114 that are coupled to the motor 110 via a first shaft 116 that, in some instances, extends through the motor 110. Thus, the first one-way clutch 112 and the second one-way clutch 114 are coupled to one another via the motor 110, or more specifically, via the first shaft 116. The first clutch 112 and/or the second clutch 114 can be positioned (e.g., on opposing sides of the motor 110) along the shaft 116 to facilitate (e.g., limiting) rotation of the shaft 116 and impact the torque. In one instance, the nozzle assembly 108 further includes a first valve 120 and a second valve 122. For example, the first valve 120 can be provided in the form of a ball valve and can be coupled to (e.g., in operational communication with) the first one-way clutch 112 via a second shaft 124, and, similarly, the second valve 122 can be provided in the form of a ball valve and can be coupled to (e.g., in operational communication with) the second one-way clutch 114 via a third shaft 126.

It is to be understood that the nozzle assembly 108 can include more valves or few valves than described herein. Additionally, it is understood that the nozzle assembly 108 can include the same number of clutches as the number of valves. Similarly, it is understood that the nozzle assembly 108 may include more or fewer shafts than disclosed herein. Moreover, it is understood that the first valve 120 and/or the second valve 122 may be another suitable type of valve other than a ball valve.

Continuing with FIG. 1, the first valve 120 is defined by a first valve housing 140 with a first ball 142 rotatable relative to the first valve housing 140. The first ball 142 can be coupled to the second shaft 124 such that the first ball 142 rotates as the second shaft 124 rotates. In one instance, the first ball 142 is partially spherical having a first exterior surface 150 and a first interior surface 152. Based on the rotational orientation of the first ball 142 (e.g., via the second shaft 124) relative to the first valve housing 140, the first valve 120 can have a first (e.g., fluid) inlet 144 in selective fluid communication with a first (e.g., fluid) outlet 146 via a first passage 154 defined by the first interior surface 152.

Similarly, as shown in FIG. 1, the second valve 122 is defined by a second valve housing 160 with a second ball 162 rotatable relative to the second valve housing 160. The second ball 162 can be coupled to the third shaft 126 such that the second ball 162 rotates as the third shaft 126 rotates. In one instance, the second ball 162 is partially spherical having a second exterior surface 170 and a second interior surface 172. Based on the rotational orientation of the second ball 162 (e.g., via the third shaft 126) relative to the second valve housing 160, the second valve 122 can have a second (e.g., fluid) inlet 164 in selective fluid communication with a second (e.g., fluid) outlet 166 via a second passage 174 defined by the second interior surface 172.

In some instances, the first valve 120 and the second valve 122 are substantially the same. The components of the first valve 120 and the second valve 122 have been differentiated for clarity when describing their respective operations, as will be explained in further detail below in conjunction with FIGS. 1-4. In alternative instances, the first valve 120 and the second valve 122 may be different (e.g., not substantially the same).

During operation, when the nozzle assembly 108 is in the first flow orientation 102, the first ball 142 is rotationally positioned in the first valve housing 140 to substantially prevent (e.g., block) the first flow 130 through the first valve 120 from the first inlet 144 to the first outlet 146, and the second ball 162 is rotationally positioned in the second valve housing 160 to substantially prevent (e.g., block) the second flow 132 through the second valve 122 from the second inlet 164 to the second outlet 166. Thus, in the first flow orientation 102 as shown in FIG. 1, fluid flowing from the common source 134 is substantially blocked from flowing through the assembly 108.

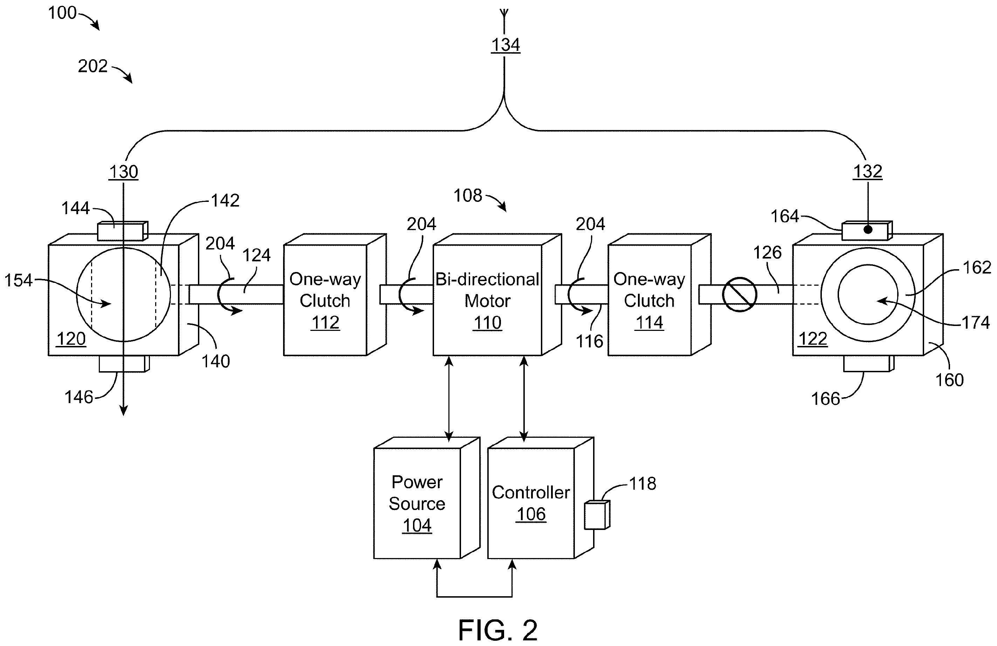

FIG. 2 illustrates the flow control system 100 operating in a second flow orientation 202. In operation, to transition from the first flow orientation 102 (shown in FIG. 1) to the second flow orientation 202, the controller 106 can instruct the motor 110 to rotate in a first direction 204 (e.g., shown by the arrows), thus rotating the first shaft 116 in the first direction 204. As shown in FIG. 2, when the first shaft 116 rotates in the first direction 204, the first one-way clutch 112 transmits torque from the first shaft 116 to the second shaft 124. Thus, torque is transmitted from the motor 110 to the second shaft 124 to rotate the first ball 142 relative to the first valve housing 140. Further, the controller 106 can monitor rotation and/or an angular position of the motor 110 and/or the first shaft 116 to align the first passage 154 with the first inlet 144 and/or the first outlet 146 of the valve 120. When the first passage 154 is aligned with the first inlet 144 and the first outlet 146, the first inlet 144 is placed in fluid communication with the first outlet 146 and the first flow 130 may substantially pass through the first valve 120.

Also shown in FIG. 2, when the first shaft 116 rotates in the first direction 204, the second one-way clutch 114 is configured to prevent torque transmission from the first shaft 116 to the third shaft 126. Thus, no torque is transmitted from the motor 110 to rotate the second ball 162 relative to the second valve housing 160. Thus, because the second passage 174 is misaligned with the second inlet 164 and the second outlet 166, the second inlet 164 is not in fluid communication with the second outlet 166 and the second flow 132 is substantially blocked (e.g., by the second ball 162) such that the fluid flow 132 is prevented from flowing through the second valve 122. Thus, in the second flow orientation 202, the assembly 108 allows the first flow 130 to flow through the first valve 120 and substantially blocks or prevents the second flow 132 from flowing through the second valve 122.

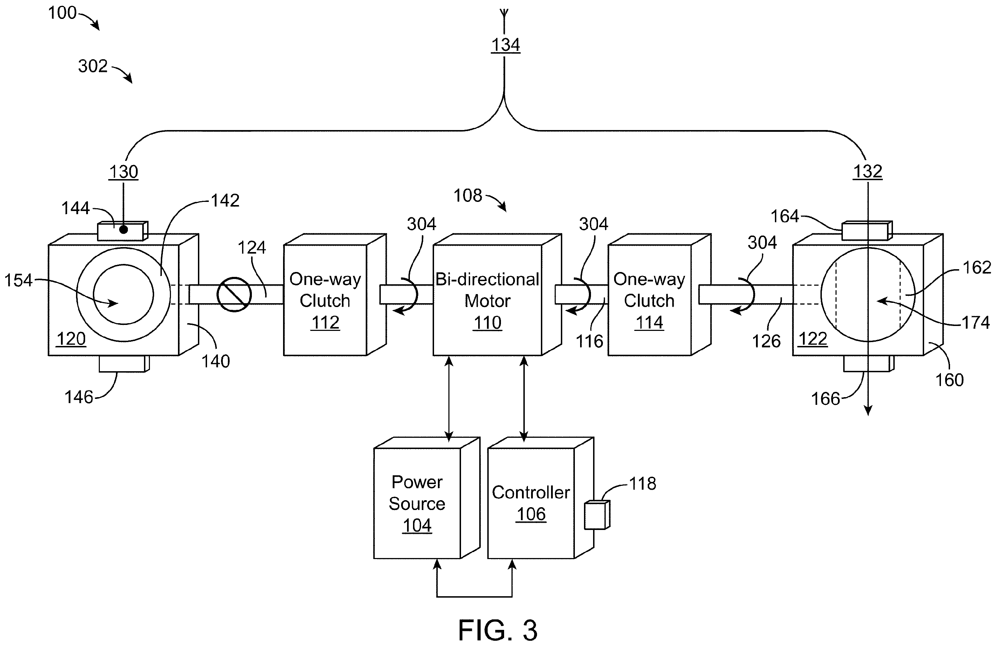

FIG. 3 illustrates the flow control system 100 operating in a third flow orientation 302. In operation, to transition from the first flow orientation 102 (shown in FIG. 1) to the third flow orientation 302, the controller 106 instructs the motor 110 to rotate in a second direction 304 (e.g., shown by the arrows), thus rotating the first shaft 116 in the second direction 304. As shown in FIG. 3, when the first shaft 116 rotates in the second direction 304, the second one-way clutch 114 transmits torque from the first shaft 116 to the third shaft 126. Thus, torque is transmitted from the motor 110 to the third shaft 126 to rotate the second ball 162 relative to the second valve housing 160. Further, the controller 106 can monitor rotation and/or an angular position of the motor 110 and/or the first shaft 116 to align the second passage 174 with the second inlet 164 and/or the second outlet 166. Thus, when the second passage 174 is aligned with the second inlet 164 and the second outlet 166, the second inlet 164 is placed in fluid communication with the second outlet 166 and the second flow 132 may substantially pass through the second valve 122.

As shown in FIG. 3, when the first shaft 116 rotates in the second direction 304, the first one-way clutch 112 is configured to prevent torque transmission from the first shaft 116 to the second shaft 124. Thus, no torque is transmitted from the motor 110 to rotate the first ball 142 relative to the first valve housing 140. Thus, because the first passage 154 is misaligned with the first inlet 144 and the first outlet 146, the first inlet 144 is not in fluid communication with the first outlet 146, and the first flow 130 is substantially blocked (e.g., by the first ball 142) such that the fluid flow is prevented from flowing through the first valve 120. Thus, in the third flow orientation 302, the assembly 108 substantially blocks or prevents the first flow 130 from flowing through the first valve 120 and allows the second flow 132 to flow through the second valve 122.

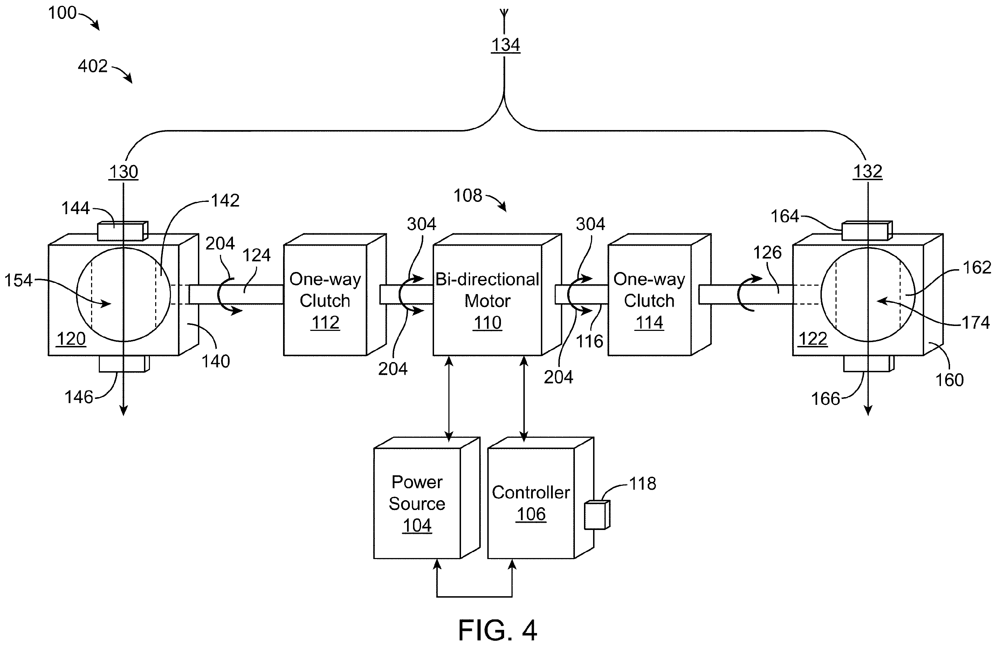

FIG. 4 illustrates the flow control system 100 operating in a fourth flow orientation 402. In operation, to transition from the first flow orientation 102 (shown in FIG. 1) to the fourth flow orientation 402, the controller 106 can instruct the motor 110 to (e.g., successively, or simultaneously) rotate in the first direction 204 and in the second direction 304. As the first direction 204 is opposite the second direction 304, the first shaft 116 rotates back and forth. As described above and shown in the example of FIG. 4, when the first shaft 116 rotates in the first direction 204, the first one-way clutch 112 transmits torque to rotate the first ball 142 relative to the first valve housing 140 while the second one-way clutch 114 does not transmit torque. Similarly, when the first shaft 116 rotates in the second direction 304, the second one-way clutch 114 transmits torque to rotate the second ball 162 relative to the second valve housing 160 while the first one-way clutch 112 does not transmit torque. Further, the controller 106 can monitor the rotation and/or angular position of the motor 110 and/or the first shaft 116 in the first direction 204 and/or in the second direction 304. Thus, the controller 106 aligns the first passage 154 with the first inlet 144 and the first outlet 146 and aligns the second passage 174 with the second inlet 164 and the second outlet 166. As a result, the first inlet 144 is placed in fluid communication with the first outlet 146, the second inlet 164 is placed in fluid communication with the second outlet 166, the first flow 130 may pass through the first valve 120, and the second flow 132 may pass through the second valve 122. Thus, in the fourth flow orientation 402, the nozzle assembly 108 allows the first flow 130 through the first valve 120 and allows the second flow 132 through the second valve 122. To transition from the fourth flow orientation 402 to the first flow orientation 102, the controller 106 can instruct the motor 110 to (e.g., successively, or simultaneously) rotate again in the first direction 204 and in the second direction 304.

As illustrated in the examples of FIGS. 1-4, in operation, the controller 106 may rotate the first shaft 116 in one or more directions (e.g., back and forth) to selectively open and close the first valve 120 and the second valve 122. More specifically, in some instances, the controller 106 monitors the angular position of the motor 110 and/or the first shaft 116 in increments (e.g., quarter-turn or about 90-degree) to selectively align or misalign the first passage 154 with the first inlet 144 and the first outlet 146 and/or align or misalign the second the second passage 174 with the second inlet 164 and the second outlet 166. In some instances, the motor 110 and/or the first shaft 116 may be indexed, and the controller 106 may detect the angular position of the motor 110 and/or the first shaft 116 to implement selective positioning of the first ball 142 and/or the second ball 162 within the first valve housing 140 and/or the second valve housing 160. Further, the controller 106 may instruct the motor 110 to rotate one or more shafts between one or more directions (e.g., back and forth) to facilitate moving the system 100 and/or the assembly 108 between the first, second, third, and/or fourth flow orientations 102, 202, 302, 402 (e.g., in any order).

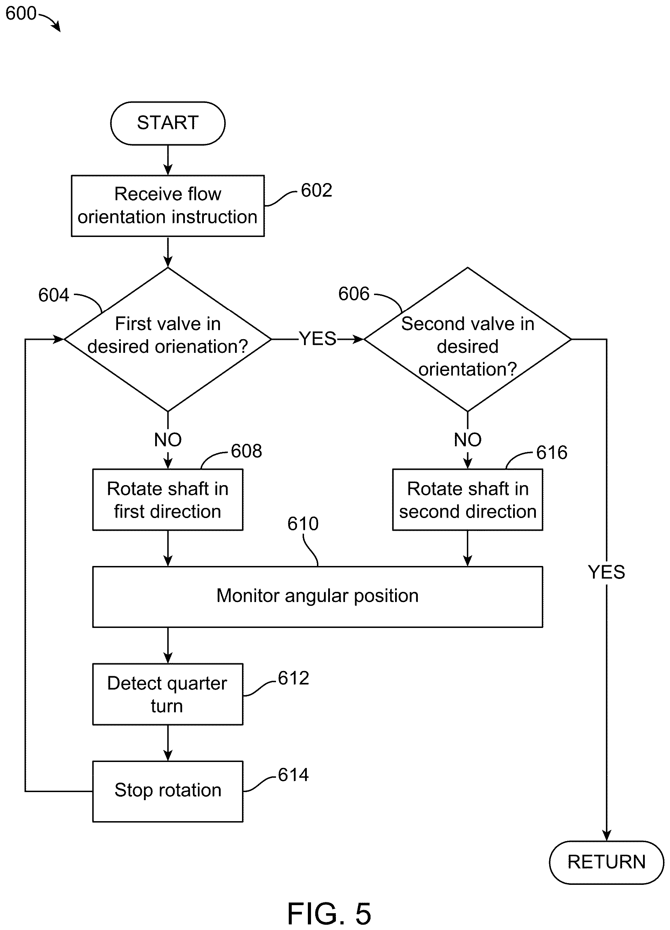

Referring to FIG. 5, a flow chart showing a method 600 for operating one or more devices (e.g., motor 110) with a controller (e.g., controller 106) is shown. The method 600 starts at block 602, where the controller 106 receives an instruction (e.g., via the interface 118 or via the network 107) to implement at least one flow orientation (e.g., first, second, third, or fourth flow orientations 102, 202, 302, 402). The method proceeds to block 604.

At block 604, the controller 106 determines whether the first valve 120 is in desired flow orientation (e.g., open or closed).

If, at block 604, the controller 106 determines that the first valve 120 is in the desired flow orientation, the method 600 proceeds to block 606.

If, at block 604, the controller 106 determines that the first valve 120 is not in the desired flow orientation, the method 600 proceeds to block 608.

At block 608, the controller 106 instructs the motor 110 to rotate the first shaft 116 in the first direction 204. The method 600 proceeds to block 610.

At block 610, the controller 106 monitors the angular position of the motor 110 and/or the first shaft 116. The method 600 proceeds to block 612.

At block 612, the controller 106 detects when the motor 110 and/or first shaft 116 have turned a quarter turn, thus reorienting the first valve 120 from open to closed (e.g., and vice versa). The method proceeds to block 614.

At block 614, the controller 106 stops rotation of the motor 110. The method 600 returns to block 604.

With respect to block 606, the controller 106 determines whether the second valve 122 is in the desired flow orientation (e.g., open or closed).

If, at block 606, the controller 106 determines that the second valve 122 is not in the desired flow orientation, the method 600 proceeds to block 616.

At block 616, the controller 106 instructs the motor 110 to rotate the first shaft 116 in the second direction 304. The method 600 proceeds to block 610.

If, at block 606, the controller 106 determines that the second valve 122 is in the desired flow orientation, the method 600 returns to block 602.

In other embodiments, other configurations are possible. For example, those of skill in the art will recognize, according to the principles and concepts disclosed herein, that various combinations, sub-combinations, and substitutions of the components discussed above can provide appropriate cooling for a variety of different configurations of motors, pumps, electronic assemblies, and so on, under a variety of operating conditions.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A nozzle assembly, comprising:
a first one-way clutch coupled to a second one-way clutch via a first shaft;
a motor configured to drive the first shaft;
a first valve coupled to the first one-way clutch; and
a second valve coupled to the second one-way clutch.

2. The nozzle assembly of claim 1, wherein, when the motor rotates in a first direction, the first one-way clutch transmits torque to the first valve and the second one-way clutch does not transmit torque to the second valve.

3. The nozzle assembly of claim 2, wherein, when the motor rotates in a second direction opposite the first direction, the first one-way clutch does not transmit torque to the first valve and the second one-way clutch transmits torque to the second valve.

4. The nozzle assembly of any one of claims 1 to 3, wherein the first one-way clutch is coupled to the first valve via a second shaft and the second one-way clutch is coupled to the second valve via a third shaft.

5. The nozzle assembly of any one of claims 1 to 4, wherein the first shaft extends through the motor.

6. The nozzle assembly of any one of claims 1 to 5, wherein one or more of the first valve or the second valve is provided in the form of a ball valve.

7. The nozzle assembly of any one of claims 1 to 6, wherein one or more of the first valve and the second valve include a valve housing, a ball rotatable within the valve housing, or a shaft coupled to the ball.

8. The nozzle assembly of any one of claims 1 to 7, wherein rotation of the motor is selectively transmitted by the first one-way clutch and the second one-way clutch to selectively open and close the first valve and the second valve, respectively.

9. A flow control system, comprising:
the nozzle assembly of any one of claims 1 to 8; and
a controller in electrical communication with the motor.

10. The flow control system of claim 9, wherein the controller selectively instructs the motor to turn in a first direction and in a second direction, the first direction being opposite the second direction.

11. The flow control system of claim 9 or 10, wherein the controller is designed to monitor an angular position of the motor.

12. The flow control system of claim 11, wherein the controller is designed to track the angular position in quarter-turn increments.

13. The flow control system of claim 11 or 12, wherein the motor is indexed with one or more indexes and the controller detects the angular position by way of the indexes.

14. The flow control system of any one of claims 11 to 13, wherein the controller determines whether the first valve and the second valve are open based on the angular position.

15. The flow control system of any one of claims 9 to 14, wherein the first one-way clutch is coupled to the second one-way clutch via a shaft extending through the motor.
